# EUROPÄISCHE PATENTANMELDUNG

(11) **EP 2 466 183 A2**
(43) Veröffentlichungstag der Anmeldung: **20.06.2012**
(21) Anmeldenummer: 11009850.6
(22) Anmeldetag: 14.12.2011
(51) Int. Cl.: F16L 37/098

(54) **Schnellkupplung für Fluidleitungen**

(30) Priorität: 17.12.2010 DE 102010054896
(71) Anmelder: VERITAS AG, 63571 Gelnhausen (DE)
(72) Erfinder: Thomson, Stuart, Lancashire PR3 1DR (GB)
(74) Vertreter: Grünecker, Kinkeldey, Stockmair & Schwanhäusser

(57) **Zusammenfassung**

Die Erfindung betrifft eine Schnellkupplung für Fluidleitungen, umfassend: einen Stecker (2) mit einem Stutzen (3) und wenigstens einer quer vom Stutzen abragenden Anschlussleitung, wobei der Stutzen dichtend in eine Aufnahmeöffnung (5) eines Gegenstücks (6) einsteckbar ist und über eine Rasteinrichtung (7) mit dem Gegenstück in Rasteingriff bringbar ist; und eine Sicherungseinrichtung (8), die zwischen einer Sicherungsstellung, in welcher der Rasteingriff gegen Lösen gesichert ist, und einer Lösestellung, in welcher der Rasteingriff lösbar ist, überführbar ist. Um die Zuverlässigkeit und Montagefreundlichkeit einer Schnellkupplung der eingangs genannten Art zu verbessern, ist erfindungsgemäß vorgesehen, dass eine Kraft, um die Sicherungseinrichtung von der Lösestellung in die Sicherungsstellung zu überführen (Verriegelungskraft), größer ist als eine Kraft, um den Stutzen mit dem Gegenstück in Rasteingriff zu bringen (Einsteckkraft).

## Beschreibung

Die Erfindung betrifft eine Schnellkupplung für Fluidleitungen, umfassend: einen Stecker mit einem Stutzen und wenigstens einer quer vom Stutzen abragenden Anschlussleitung, wobei der Stutzen dichtend in eine Aufnahmeöffnung eines Gegenstücks einsteckbar ist und über eine Rasteinrichtung mit dem Gegenstück in Rasteingriff bringbar ist; und eine Sicherungseinrichtung, die zwischen einer Sicherungsstellung, in welcher der Rasteingriff gegen Lösen gesichert ist, und einer Lösestellung, in welcher der Rasteingriff lösbar ist, überführbar ist.

Eine derartige Schnellkupplung ist aus der WO 2007/042344 A1 bekannt. Bei der Montage dieser Schnellkupplung ist der Stutzen einerseits mit dem Gegenstück in Rasteingriff zu bringen, andererseits ist die Sicherungseinrichtung von der Lösestellung in die Sicherungsstellung zu überführen. Gelegentlich kommt es vor, dass sich der Stutzen mit dem Gegenstück nicht vollständig in Rasteingriff befindet oder sich der Rasteingriff unbeabsichtigt löst, bevor die Sicherungseinrichtung von der Lösestellung in die Sicherungsstellung überführt wird. Bei unsachgemäßer Montage der Schnellkupplung, die bspw. im Bereich von Leckölleitungen von Kraftfahrzeugen eingesetzt wird, besteht eine erhebliche Gefahr, dass sich die Schnellkupplung im Betrieb vom Gegenstück löst und die Kupplungs- und Dichtfunktion nicht mehr ausreichend erfüllt.

Der Erfindung liegt die Aufgabe zugrunde, die Zuverlässigkeit und Montagefreundlichkeit einer Schnellkupplung der eingangs genannten Art zu verbessern.

Um die der Erfindung zugrunde liegende Aufgabe zu lösen, wird eine Schnellkupplung für Fluidleitungen bereit gestellt, umfassend: einen Stecker mit einem Stutzen und wenigstens einer quer vom Stutzen abragenden Anschlussleitung, wobei der Stutzen dichtend in eine Aufnahmeöffnung eines Gegenstücks einsteckbar ist und über eine Rasteinrichtung mit dem Gegenstück in Rasteingriff bringbar ist; und eine Sicherungseinrichtung, die zwischen einer Sicherungsstellung, in welcher der Rasteingriff gegen Lösen gesichert ist, und einer Lösestellung, in welcher der Rasteingriff lösbar ist, überführbar ist, wobei eine Kraft, um die Sicherungseinrichtung von der Lösestellung in die Sicherungsstellung zu überführen (Verriegelungskraft), größer ist als eine Kraft, um den Stutzen mit dem Gegenstück in Rasteingriff zu bringen (Einsteckkraft). Es kann sich als nützlich erweisen, wenn die Sicherungseinrichtung durch Verschiebung entlang der Achse des Stutzens zwischen der Sicherungsstellung und der Lösestellung überführt werden kann. Vorzugsweise werden die Verriegelungskraft und die Einsteckkraft in Einsteckrichtung des Stutzens auf die Sicherungseinrichtung aufgebracht, um die Verriegelungsbewegung der Sicherungseinrichtung mit der Einsteckbewegung des Stutzens optimal zu koppeln. Da die Verriegelungskraft größer ist als die Einsteckkraft, wird der Stutzen beim Verriegeln der Sicherungseinrichtung zwangsläufig in dem Gegenstück verrastet. Daraus folgt, dass sich der Stutzen mit dem Gegenstück zwangsläufig in Rasteingriff befindet, wenn sich die Sicherungseinrichtung in der Sicherungsstellung befindet. Somit kann durch Feststellung der Sicherungsstellung der Sicherungseinrichtung gleichzeitig der Rasteingriff des Stutzens mit dem Gegenstück verifiziert werden, was die Prozesssicherheit bei der Montage der Schnellkupplung erhöht und die Fertigungskosten verringert, da eine gesonderte Überprüfung des Rasteingriffs entfallen kann. Nach der erfindungsgemäßen Lösung werden durch konstruktive Maßnahmen zur Fehlervermeidung unbeabsichtigte Montagefehler von vorne herein verhindert (Poka Yoke Prinzip). Der Stecker ist vorzugsweise im Wesentlichen X-förmig, T-förmig, Y-förmig oder L-förmig ausgebildet und weist vorzugsweise zwei Anschlussleitungen auf, deren Achsen mit der Achse des Stutzens in derselben Ebene oder in verschiedenen Ebenen liegen können. Die Sicherungseinrichtung ist vorzugsweise in der Sicherungsstellung und/oder in der Lösestellung kraftschlüssig und/oder formschlüssig, vorzugsweise rastend, am Stecker festlegbar. Optional wird beim Einrasten und/oder Ausrasten der Sicherungseinrichtung ein optisch, haptisch und/oder akustisch wahrnehmbares Signal erzeugt. Vorteilhafterweise umgreift oder umschließt die Sicherungseinrichtung den Stecker in der Sicherungsstellung und/oder in der Lösestellung zumindest teilweise.

Vorteilhafte Weiterbildungen der Erfindung sind Gegenstände der Unteransprüche.

Es kann von Vorteil sein, wenn die Sicherungseinrichtung zumindest abschnittsweise auf einer entgegen der Einsteckrichtung des Stutzens abweisenden Seite des Steckers angeordnet ist. Dadurch kann die Sicherungseinrichtung auch in bereits eingestecktem Zustand des Steckers nachträglich leichter am Stecker montiert werden.

Es kann sich als hilfreich erweisen, wenn die Sicherungseinrichtung ein Betätigungselement aufweist, das auf einer entgegen der Einsteckrichtung des Stutzens abweisenden Seite des Steckers angeordnet ist. Dadurch kann die Sicherungseinrichtung leichter betätigt werden.

Es kann sich als nützlich erweisen, wenn das Betätigungselement im Wesentlichen ringförmig ausgebildet ist. Der Begriff "ringförmig" soll bedeuten, dass das Betätigungselement oder ein Abschnitt davon entlang einer in sich geschlossenen Linie verläuft, und vorzugsweise kreisförmig, polygonal oder dgl. ausgebildet ist. Das Betätigungselement kann bspw. auch spiegelsymmetrisch oder rotationssymmetrisch ausgebildet sein und konzentrisch zur Achse des Stutzens angeordnet werden. Dadurch können Kräfte, die auf das Betätigungselement wirken, gleichmäßig verteilt werden, so dass keine Kipp- oder Drehmomente entstehen, die zur Verkeilung der Sicherungseinrichtung gegenüber dem Stecker führen könnten.

Es kann auch praktisch sein, wenn das Betätigungselement wenigstens eine Betätigungsfläche aufweist, die entgegen der Einsteckrichtung des Stutzens von dem Betätigungselement abweist und/oder wenigstens eine Betätigungsfläche aufweist, die in Einsteckrichtung des Stutzens von dem Betätigungselement abweist. Diese Maßnahme begünstigt, dass Druckkräfte auf die Betätigungsfläche(n) exakt in oder entgegen der Einsteckrichtung des Stutzens wirken, so dass Kipp- oder Drehmomente verhindert werden, die zur Verkeilung der Sicherungseinrichtung gegenüber dem Stecker führen könnten.

In einer vorteilhaften Weiterbildung der Erfindung weist das Betätigungselement eine Öffnung auf, welche sich - vorzugsweise entgegen der Einsteckrichtung des Stutzens - in oder durch das Betätigungselement erstreckt. Diese Öffnung kann beispielsweise als Anzeigeeinrichtung oder zur Sichtkontrolle genutzt werden, um festzustellen, in welcher Stellung sich die Sicherungseinrichtung gegenüber dem Stecker befindet.

Es kann sich als vorteilhaft herausstellen, wenn wenigstens ein Teil des Steckers in der Öffnung des Betätigungselements aufnehmbar ist. Dadurch kann das Betätigungselement besonders genau gegenüber dem Stecker positioniert werden.

Es kann nützlich sein, wenn wenigstens ein Teil des Steckers, vorzugsweise der in der Öffnung aufgenommene Teil des Steckers, in wenigstens einer Stellung der Sicherungseinrichtung, vorzugsweise in der Sicherungsstellung, bündig mit wenigstens einem Teil des Betätigungselements abschließt. Dadurch kann durch eine visuelle oder haptische Prüfung besonders einfach festgestellt werden, in welcher Stellung sich die Sicherungseinrichtung gegenüber dem Stecker befindet.

In einer anderen vorteilhaften Weiterbildung der Erfindung weist die Sicherungseinrichtung eine auf die Außenkontur eines Teils des Steckers abgestimmte Innenkontur auf, so dass die Sicherungseinrichtung zwischen der Lösestellung und der Sicherungsstellung vorzugsweise verdrehsicher und/oder kippsicher gleitend gegenüber dem Stecker geführt wird. Dadurch kann eine Fehlbedienung der Sicherungseinrichtung weitgehend verhindert werden.

Es kann von Nutzen sein, wenn die Sicherungseinrichtung und/oder der Stecker wenigstens einen Rastvorsprung, wenigstens eine Führungsbahn und wenigstens eine innerhalb der Führungsbahn angeordnete Rastaufnahme aufweisen, wobei der Rastvorsprung zwischen der Sicherungsstellung und der Lösestellung in der Führungsbahn gleitend geführt wird, und der Rastvorsprung in der Sicherungsstellung und/oder in der Lösestellung in der Rastaufnahme verrastbar ist. Dadurch wird die Sicherungseinrichtung sowohl in der Sicherungsstellung als auch der Lösestellung, aber auch in jeder Zwischenstellung genau gegenüber dem Stecker positioniert, wobei die Gefahr einer Fehlbedienung im Wesentlichen ausgeschlossen ist.

Es kann von Vorteil sein, wenn die Sicherungseinrichtung ein Betätigungselement aufweist, das durch ein mit dem Stecker vorzugsweise lösbar verbundenes Sicherungselement am Stecker gesichert ist. Nach einer Gestaltungsform ist das Sicherungselement ein mit dem Stecker steckverbindbarer Deckel. Nach einer weiteren Gestaltungsform ist das Sicherungselement oder ein Abschnitt davon in eine Öffnung des Steckers, vorzugsweise in eine Öffnung einer Befestigungseinrichtung, einsteckbar. Nach noch einer weiteren Gestaltungsform ist das Sicherungselement oder ein Abschnitt davon auf den Stecker, vorzugsweise auf eine Befestigungseinrichtung und/oder auf zumindest eine der Anschlussleitungen, aufsteckbar. Dazu kann das Sicherungselement ein, zwei oder mehrere Aufsteckabschnitte aufweisen. Gemäß einer weiteren Gestaltungsform ist das Betätigungselement in wenigstens einer Stellung, vorzugsweise in der Lösestellung und/oder in der Sicherungsstellung, an dem Sicherungselement festlegbar. Gemäß einer weiteren Gestaltungsform übergreift das Sicherungselement das Betätigungselement randseitig und/oder hält dieses unverlierbar am Stecker fest. Es kann außerdem vorteilhaft sein, wenn das Sicherungselement länger ist als das Betätigungselement breit ist.

Ein weiterer Aspekt der Erfindung betrifft eine Schnellkupplung für Fluidleitungen, umfassend: einen Stecker mit einem Stutzen und wenigstens einer quer vom Stutzen abragenden Anschlussleitung, wobei der Stutzen dichtend in eine Aufnahmeöffnung eines Gegenstücks einsteckbar ist und über eine Rasteinrichtung mit dem Gegenstück in Rasteingriff bringbar ist; und eine Sicherungseinrichtung, die zwischen einer Sicherungsstellung, in welcher der Rasteingriff gegen Lösen gesichert ist, und einer Lösestellung, in welcher der Rasteingriff lösbar ist, überführbar ist, wobei die Rasteinrichtung wenigstens einen Rastarm umfasst, wobei die Sicherungseinrichtung und der Rastarm aufeinander abgestimmte Konturen aufweisen, so dass die Sicherungseinrichtung zwischen der Lösestellung und der Sicherungsstellung verdrehsicher und/oder kippsicher gleitend an dem Rastarm geführt wird. Vorzugsweise ist die Innenkontur der Sicherungseinrichtung auf die Außenkontur des Rastarms abgestimmt, oder umgekehrt. Dabei wirken die Sicherungseinrichtung und der Rastarm wie weibliche und männliche Führungseinrichtungen zusammen. Nach einer Gestaltungsform sind die Konturen der Sicherungseinrichtung und des Rastarms derart aufeinander abgestimmt, dass die Sicherungseinrichtung nur entlang einer Achse, die vorzugsweise parallel zur Einsteckrichtung und/oder parallel zur Achse des Stutzens verläuft, bewegbar ist, während alle anderen Freiheitsgrade der Sicherungseinrichtung, insbesondere eine Bewegung quer zu dieser Achse und/oder eine Drehung um eine beliebige Achse blockiert sind.

Es kann sinnvoll sein, wenn die Sicherungseinrichtung wenigstens zwei Führungsabschnitte aufweist, die einen Rastarm der Rasteinrichtung beidseitig flankieren und beim Überführen zwischen der Sicherungsstellung und der Lösestellung gleitend an diesem Rastarm geführt werden. Dadurch kann die Sicherungseinrichtung kippfrei am Stutzen bzw. am Rastarm der Rasteinrichtung stabilisiert werden. Dies ist insbesondere dann sinnvoll, wenn große Kräfte zur Überführung der Sicherungseinrichtung von der Lösestellung in die Sicherungsstellung auf die Sicherungseinrichtung aufgebracht werden müssen. So kann sichergestellt werden, dass die Betätigungsflächen der Sicherungseinrichtung optimal zur Aufnahme der Betätigungskräfte ausgerichtet sind und die Betätigungskräfte ausschließlich in/oder entgegen der Einstreckrichtung des Stutzens wirken. Nach einer Gestaltungsform bilden die Führungsabschnitte eine Führungsrinne, welche den Rastarm beim Überführen zwischen der Sicherungsstellung und der Lösestellung gleitend aufnimmt. Beim Überführen von der Sicherungsstellung in die Lösestellung fährt der Rastarm vorzugsweise tiefer in die Führungsrinne ein. Gemäß einer weiteren Gestaltungsform befindet sich ein Sicherungsabschnitt zwischen den zwei Führungsabschnitten. Bei diesem Prinzip befinden sich die zwei Führungsabschnitte als Stabilisierungselemente seitlich neben dem Sicherungsabschnitt, wobei die Führungsabschnitte dazu dienen, den Sicherungsabschnitt lagesicher zwischen den Stutzen und den Rastarme zu schieben und damit den Rastarm zu blockieren. Dieses Design wurde insbesondere entwickelt, um den Stecker automatisiert montieren zu können. Nach einer Gestaltungsform umfasst die Sicherungseinrichtung für jeden Rastarm der Rasteinrichtung zwei Führungsabschnitte, welche diesen Rastarm beidseitig flankieren und beim Überführen zwischen der Sicherungsstellung und der Lösestellung gleitend an diesem Rastarm geführt werden.

Die beschriebenen Ausführungsformen können beliebig kombiniert werden. Bevorzugte Weiterbildungen der Erfindung ergeben sich durch Kombinationen der Merkmale, die in den Ansprüchen, in der Beschreibung und in den Zeichnungen offenbart sind.

### Kurze Beschreibung der Figuren

- Fig. 1: zeigt eine perspektivische Darstellung der Schnellkupplung nach einem ersten Ausführungsbeispiel der Erfindung mit einem passenden Gegenstück im Teilschnitt, wobei sich die Sicherungseinrichtung in der Lösestellung befindet.
- Fig. 2: zeigt eine perspektivische Darstellung der Schnellkupplung nach dem ersten Ausführungsbeispiel der Erfindung, wobei sich die Sicherungseinrichtung in der Sicherungsstellung befindet.
- Fig. 3: zeigt eine Draufsicht auf die Schnellkupplung nach dem ersten Ausführungsbeispiel der Erfindung sowohl in der Lösestellung als auch in der Sicherungsstellung, wobei Fig. 3a einen Schnitt entlang der Line A-A und Fig. 3b einen Schnitt entlang der Line B-B zeigt.
- Fig. 4: zeigt eine perspektivische Darstellung der Schnellkupplung nach dem ersten Ausführungsbeispiel der Erfindung im Rasteingriff mit dem passenden Gegenstück, wobei sich die Sicherungseinrichtung in der Lösestellung befindet.
- Fig. 5: zeigt eine perspektivische Darstellung der Schnellkupplung nach dem ersten Ausführungsbeispiel der Erfindung im Rasteingriff mit dem passenden Gegenstück, wobei sich die Sicherungseinrichtung in der Sicherungsstellung befindet.
- Fig. 6: zeigt eine perspektivische Darstellung der Schnellkupplung nach einem zweiten Ausführungsbeispiel der Erfindung, wobei sich die Sicherungseinrichtung in der Lösestellung befindet.
- Fig. 7: zeigt eine Seitenansicht der Schnellkupplung nach Fig. 6.
- Fig. 8: zeigt eine andere Seitenansicht der Schnellkupplung nach Fig. 6.
- Fig. 9: zeigt eine Draufsicht auf die Schnellkupplung nach Fig. 6, wobei Fig. 9a einen Schnitt entlang der Line A-A und Fig. 9b einen Schnitt entlang der Line B-B zeigt.
- Fig. 10: zeigt eine perspektivische Explosionsdarstellung der Schnellkupplung nach einem dritten Ausführungsbeispiel der Erfindung.
- Fig. 11: zeigt eine perspektivische Darstellung der Schnellkupplung nach dem dritten Ausführungsbeispiel der Erfindung in einem montierten Zustand.

### Detaillierte Beschreibung der bevorzugten Ausführungsbeispiele

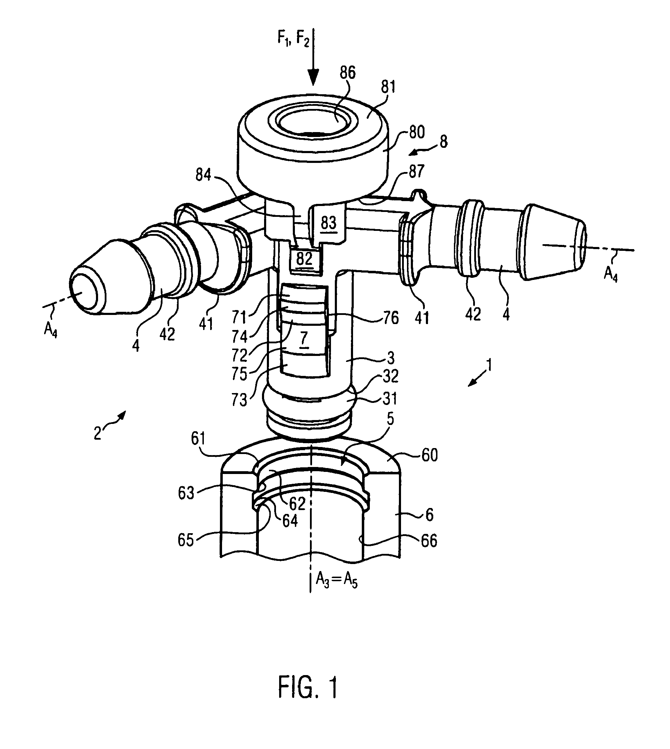

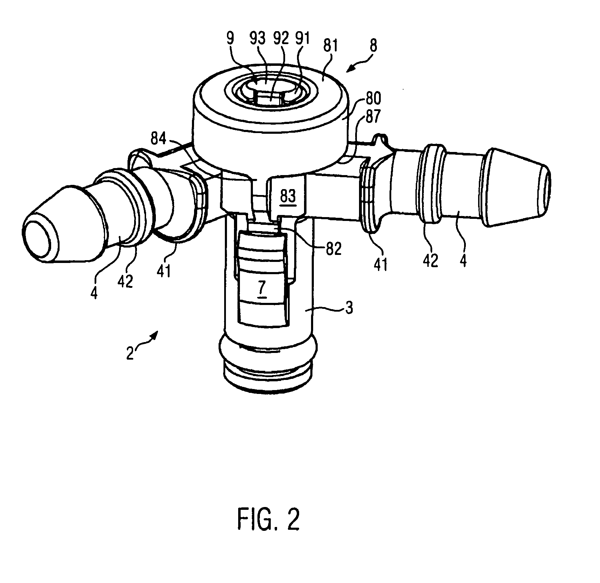

Das erste Ausführungsbeispiel der Erfindung, das nachstehend mit Bezug auf die Figuren 1 bis 5 beschrieben wird, betrifft eine als Leckölstecker ausgebildete Steck-Schnellkupplung 1 für Fluidleitungen. Figur 1 zeigt eine perspektivische Ansicht der erfindungsgemäßen Schnellkupplung 1 nach dem ersten Ausführungsbeispiel mit einem Gegenstück 6 mit passender Aufnahmeöffnung 5, wobei sich die Sicherungseinrichtung 8 in der Lösestellung befindet.

Die erfindungsgemäße Schnellkupplung 1 umfasst einen einstückigen, im Wesentlichen T-förmigen Stecker 2 aus glasfaserverstärktem Kunststoff (z.B. PA66+6 GF30 bzw. Polyamid 66+6 mit 30% Glasfaseranteil) mit einem Stutzen 3 und zwei radial vom Stutzen 3 abragenden Anschlussleitungen 4. Anzuschließende Leckölleitungen sind auf die konusförmigen Endstücke der Anschlussleitungen 4 aufsteckbar. Die Achsen A4 der Anschlussleitungen 4 erstrecken sich radial zur Achse A3 des Stutzens 3 und schließen über die Achse A3 des Stutzens 3 einen Winkel von ca. 135° ein. Die Achse A3 des Stutzens 3 fällt im eingesteckten Zustand bestimmungsgemäß mit der Achse A5 der Aufnahmeöffnung 3 zusammen. Halteabschnitte 41, 42 an den Anschlussleitungen 4 können der Positionierung des Steckers 2 gegenüber dem Gegenstück 6 dienen.

Der Stutzen 3 ist dichtend in die Aufnahmeöffnung 5 des Gegenstücks 6 einsteckbar. In Einsteckrichtung der Schnellkupplung 1 ist an einem Ende des Stutzens 3 ein Dichtungsring 31 in einer umlaufenden Nut 32 gehalten.

Die im Gegenstück 6 definierte Aufnahmeöffnung 5 umfasst, ausgehend von einer Oberfläche 60 des Gegenstücks 6, eine Fase 61 im Eingangsbereich, einen Rastvorsprung 62, eine konusförmige Aufweitung 63, eine Hinterschneidung 64, eine konusförmige Verjüngung 65 und einen Haltebereich 66.

Zwei identisch ausgebildete, federnde Rastarme 7 ragen auf diametral gegenüber liegenden Seiten der Achse des Stutzens 3 entgegen der Einsteckrichtung vom Stutzen 3 ab und sind mit dem Gegenstück 6 in Rasteingriff bringbar. Jeder Rastarm 7 weist eine Keilfläche 71 auf, die im Wesentlichen am freien Ende des Rastarms 7 angrenzend an den größten Radius des Rastarms 7 ausgebildet ist und entgegen der Einsteckrichtung vom Stutzen 2 abweist. Die Keilfläche 71 weist in etwa einen Winkel von 45° zur Achse A3 des Stutzens 2 auf. Des weiteren weist jeder Rastarm 7 an der Außenseite zwei Keilflächen 72, 73 auf, die in Einsteckrichtung vom Stutzen 3 abweisen, wobei die Keilfläche 72 angrenzend an den größten Radius des Rastarms 7 ausgebildet ist und die Keilfläche 73 unmittelbar angrenzend an den zylindrischen Teil des Stutzens 3 ausgebildet ist. Die Keilflächen 72, 73 weisen jeweils in etwa einen Winkel von 20° zur Achse A3 des Stutzens 3 auf. Aufgrund der unterschiedlichen Neigungswinkel der Keilflächen 71 und 72 zur Achse A3 des Stutzens 3 ist eine Einsteckkraft F2 des Stutzens 3 kleiner als eine Auszugkraft F4 des Stutzens 3. Zwischen den Keilflächen 71, 72, 73 befinden sich Gleitflächen 74, 75, die im Wesentlichen parallel zur Achse A3 des Stutzens 2 verlaufen, wobei die Gleitfläche 74 den größten Radius des Rastarms 7 definiert. Die Außenkontur der Rastarme 7 ist an die Innenkontur der Aufnahmeöffnung 5 angepasst. Vorzugsweise sind die Keilflächen 71, 72, 73 im Wesentlichen als Kegelmantelabschnitte ausgebildet, während die Gleitflächen 74, 75 im Wesentlichen als Zylindermantelabschnitte ausgebildet sind. Eine zum Stutzen 3 weisende Innenseite 76 des Rastarms 7 ist als Keilfläche ausgebildet und ist vom Fußpunkt bis zum Ende des Rastarms 7 kontinuierlich gegenüber der Achse des Stutzens 2 geneigt, vorzugsweise in einem Winkel von ca. 10°.

Die Sicherungseinrichtung 8 ist vorzugsweise einteilig aus Kunststoff oder Metall ausgebildet und übergreift den Stecker 2 vorzugsweise auf einer entgegen der Einsteckrichtung des Stutzens 3 abweisenden Seite oberhalb der Anschlussleitungen 4. Dabei umfasst die Sicherungseinrichtung 8 ein ringförmiges und/oder scheibenförmiges Betätigungselement 80 mit je einer in und einer entgegen der Einsteckrichtung des Stutzens 3 vom Betätigungselement 80 abweisenden Betätigungsfläche 81, 87 sowie zwei Sicherungsabschnitte 82, die sich auf zwei sich gegenüber liegenden Seiten des Stutzens 3 jeweils in Einsteckrichtung des Stutzens 3 erstrecken und am Ende eines flächigen Führungsabschnitts 83 befinden. Jeder Führungsabschnitt 83 umfasst einen mittig radial nach außen vorspringenden Steg 84, der sich parallel zu Achse A3 des Stutzens erstreckt. Die Führungsabschnitte 83 stehen parallel zueinander und parallel zur Einsteckrichtung des Stutzens 3 von dem Betätigungsabschnitt 80 hervor. Am Innenumfang 86 des ringförmigen Betätigungselements 80 befinden sich zwei radial nach innen vorspringende Rastvorsprünge 85 auf gegenüber liegenden Seiten des Innenumfangs 86. Über die Rastvorsprünge 85 ist die Sicherungseinrichtung 8 in der Lösestellung und in der Sicherungsstellung am Stecker 2 formschlüssig festlegbar und verrastbar. Die Sicherungseinrichtung 8 wirkt mit dem Stecker 2 derart zusammen, dass die Sicherungseinrichtung 8 verdrehsicher, verschieblich und unverlierbar auf dem Stecker 2 angeordnet ist und durch Verschiebung in bzw. entgegen der Einsteckrichtung zwischen der Lösestellung, in welcher der Rasteingriff der Schnellkupplung 1 lösbar ist, und der Sicherungsstellung, in welcher der Rasteingriff sichergestellt ist, überführt werden kann.

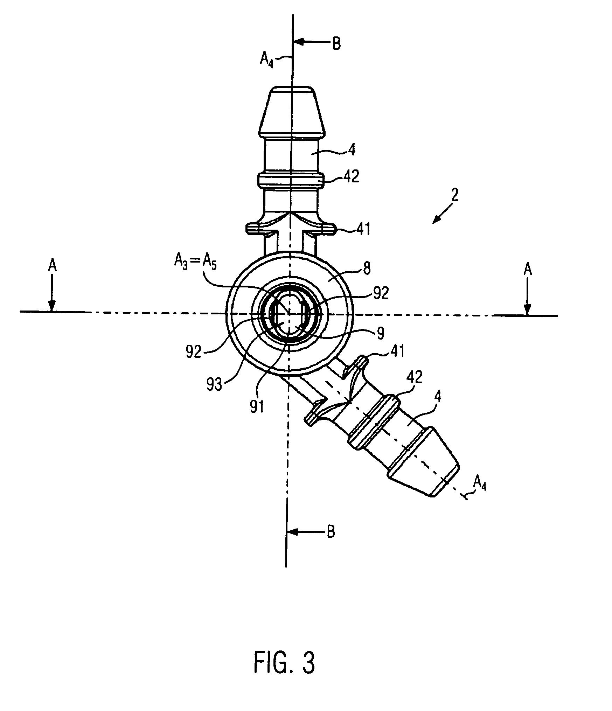

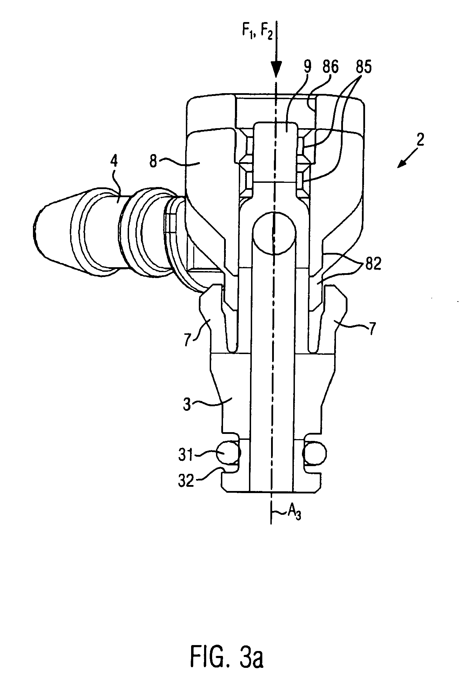

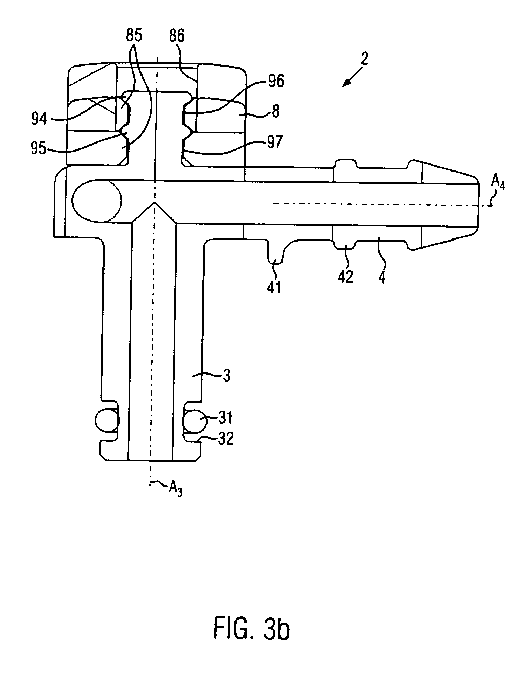

Eine Befestigungseinrichtung 9, die vorzugsweise als Formteil aus Kunststoff oder Metall ausgeführt ist, ist einteilig mit dem Stecker 2 verbunden oder ausgebildet, oder ist fest oder lösbar mit dem Rest des Steckers 2 verbunden, um einen Teil des Steckers 2 zu bilden. Die Befestigungseinrichtung 9 umfasst einen im Wesentlichen zylindrischen Befestigungsabschnitt 91 mit zwei Führungsbahnen 92, die sich auf gegenüber liegenden Seiten des Befestigungsabschnitts 91 parallel zur Achse A3 des Stutzens erstrecken. In den Führungsbahnen 92, die bezogen auf die Achse A3 vorzugsweise gleichwinklig zu den Rastarmen 7 des Stutzens 3 oder um 90° versetzt zu den Rastarmen 7 angeordnet sind (vgl. Fig. 3a, 3b), können die Rastvorsprünge 85 zwischen der Sicherungsstellung und der Lösestellung gleitend geführt werden. Jede der Führungsbahnen 92 umfasst zwei durch Raststufen 94, 95 begrenzte Rastaufnahmen 96, 97, in welchen die Rastvorsprünge 85 in der Sicherungsstellung und/oder in der Lösestellung rastend festlegbar ist. Entlang der Führungsbahnen 92 können auch weitere Rastaufnahmen vorgesehen werden.

Die Konturen und Dimensionen des Steckers 2, der Befestigungseinrichtung 9 und der Sicherungseinrichtung 8 sind derart aufeinander abgestimmt, dass die Sicherungseinrichtung 8 verdrehsicher, kippsicher und gleitend zwischen der Lösestellung und der Sicherungsstellung überführbar ist. Insbesondere weisen die Führungsabschnitte 83 eine auf die Außenkontur des Steckers 2 abgestimmte Innenkontur auf und gleiten auf den diametral entgegen gesetzten Außenseiten des Steckers 2.

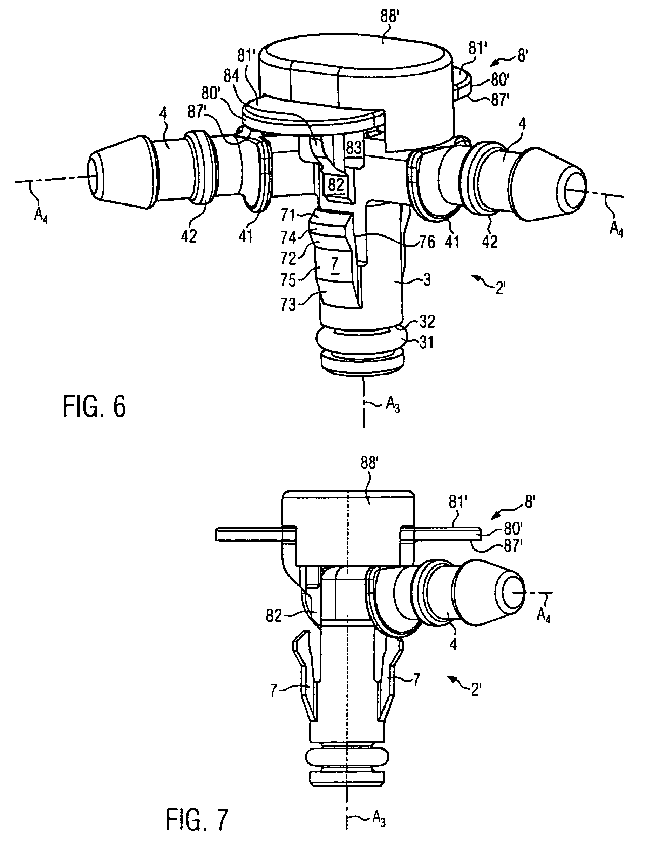

Das zweite Ausführungsbeispiel der Erfindung, das nachstehend mit Bezug auf die Figuren 6 bis 9 beschrieben wird, basiert im Wesentlichen auf dem ersten Ausführungsbeispiel der Erfindung. Für identische Merkmale werden identische Bezugszeichen wie im ersten Ausführungsbeispiel verwendet und auf eine Wiederholung der Beschreibung verzichtet. Die unterschiedlichen Merkmale gegenüber dem ersten Ausführungsbeispiel sind mit einem Apostroph versehen und werden nachstehend erläutert.

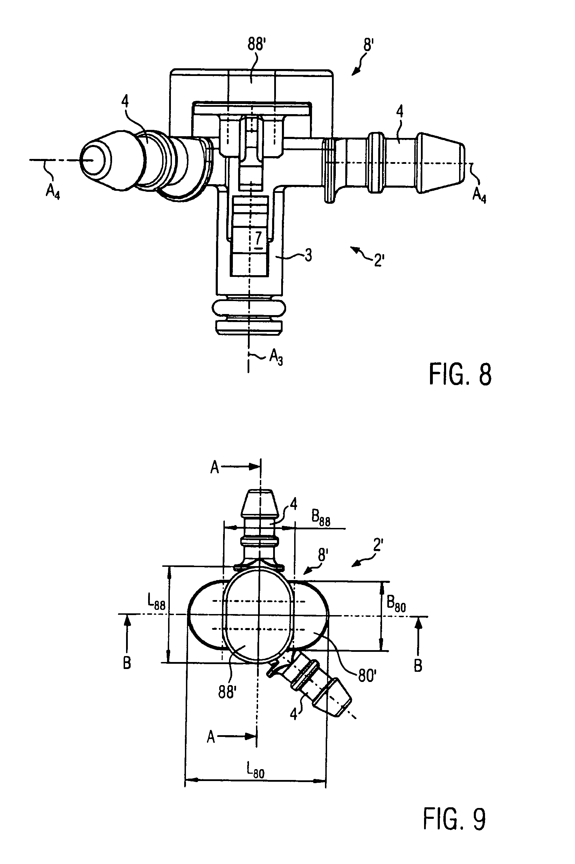

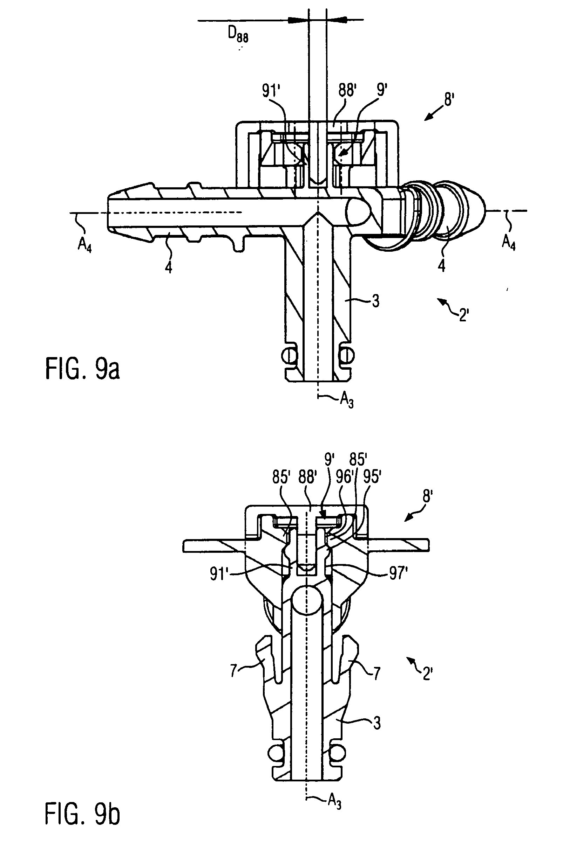

In Abwandlung vom ersten Ausführungsbeispiel umfasst die Sicherungseinrichtung 8' ein anders gestaltetes, im Wesentlichen ringförmiges und/oder scheibenförmiges Betätigungselement 80' mit einem im Wesentlichen ovalen Umriss, dessen Verhältnis der Länge L80 (bspw. 20 mm) zur Breite B80 (bspw. 10 mm) ca. 2:1 beträgt. Je zwei Betätigungsflächen 81', 87' weisen in und entgegen der Einsteckrichtung des Stutzens 3 vom Betätigungselement 80' ab. Zwei Sicherungsabschnitte 82 erstrecken sich jeweils in Einsteckrichtung des Stutzens 3 und befinden sich am Ende von flächigen Führungsabschnitten 83 auf zwei sich gegenüber liegenden Seiten des Stutzens 3. Die Führungsabschnitte 83 weisen jeweils einen mittig radial nach außen vorspringenden Steg 84 auf. Das Betätigungselement 80' ist auf einer entgegen der Einsteckrichtung des Stutzens 3 abweisenden Seite des Steckers 2' angeordnet und wird durch einen auf den Stecker 2' aufsteckbaren Deckel 88' mit einem im Wesentlichen ovalen Umriss mit einem Verhältnis der Länge L88 zur Breite B88 von ca. 1,4:1 unverlierbar am Stecker 2' gesichert. Der Deckel 88' dient hierbei als Sicherungselement, um das Betätigungselement 80' formschlüssig gegenüber dem Stecker 2' festzulegen. Die Länge L88 des Deckels 88' (bspw. 14 mm) erstreckt sich vorzugsweise parallel zu einer Achse A4 und/oder quer zur Länge L80 und/oder parallel zur Breite B80 des Betätigungselement 80' und ist vorzugsweise um ca. 40% größer als die Breite B80 des Betätigungselements 80'. Der Deckel 88' ist mit einem in Einsteckrichtung vorspringenden Zapfen, der das Betätigungselement 80' durchdringt und unverlierbar am Stecker 2' sichert, in eine entsprechende Aufnahme der Befestigungseinrichtung 9' eingesteckt (Fig. 9a). Zwei seitliche Stützarme des eingesteckten Deckels 88' reichen bis auf das Niveau der Anschlussleitungen 4 hinab und übergreifen das Betätigungselement 80' randseitig in Richtung dessen Breite B80 (Fig. 9; Fig. 9a). Der Durchmesser D88 des Zapfens beträgt beispielsweise ca. 1,5 mm. Am Innenumfang des ringförmigen Betätigungselements 80' befinden sich zwei radial nach innen vorspringende Rastvorsprünge 85', über welche die Sicherungseinrichtung 8' in der Lösestellung und in der Sicherungsstellung am Stecker 2' formschlüssig festlegbar und verrastbar ist. Die Sicherungseinrichtung 8' wirkt mit dem Stecker 2' derart zusammen, dass die Sicherungseinrichtung 8' verdrehsicher, verschieblich und unverlierbar auf dem Stecker 2' angeordnet ist und durch Verschiebung in bzw. entgegen der Einsteckrichtung zwischen der Lösestellung, in welcher der Rasteingriff der Schnellkupplung 1 lösbar ist, und der Sicherungsstellung, in welcher der Rasteingriff sichergestellt ist, überführt werden kann.

Die Befestigungseinrichtung 9' umfasst einen im Wesentlichen hohlzylindrischen Befestigungsabschnitt 91' mit zwei Führungsbahnen, die sich auf gegenüber liegenden Seiten des Befestigungsabschnitts 91' parallel zur Achse A3 des Stutzens 3 erstrecken. In den Führungsbahnen können die Rastvorsprünge 85' zwischen der Sicherungsstellung und der Lösestellung gleitend geführt werden. Jede der Führungsbahnen umfasst eine obere Rastaufnahme 96', die durch die Raststufe 95' und den Deckel 88' begrenzt wird, sowie eine untere Rastaufnahme 97' unterhalb der Raststufe 95'. Der Zapfen des Deckels 88' ist in den hohlzylindrischen Befestigungsabschnitt 91' eingesteckt, so dass der Deckel 88' die Führungsbahnen nach oben begrenzt und den oberen Anschlag der Führungsbahnen bildet. Die Rastvorsprünge 85' sind in den Rastaufnahmen 96', 97' in der Sicherungsstellung und/oder in der Lösestellung rastend festlegbar. Entlang der Führungsbahnen können auch weitere Rastaufnahmen vorgesehen werden.

Die Konturen und Dimensionen des Steckers 2', der Befestigungseinrichtung 9' und der Sicherungseinrichtung 8' sind wie im ersten Ausführungsbeispiel derart aufeinander abgestimmt, dass die Sicherungseinrichtung 8' verdrehsicher, kippsicher und gleitend zwischen der Lösestellung und der Sicherungsstellung überführbar ist. Insbesondere weisen die Führungsabschnitte 83 eine auf die Außenkontur des Steckers 2' abgestimmte Innenkontur auf und gleiten auf den diametral entgegen gesetzten Außenseiten des Steckers 2'.

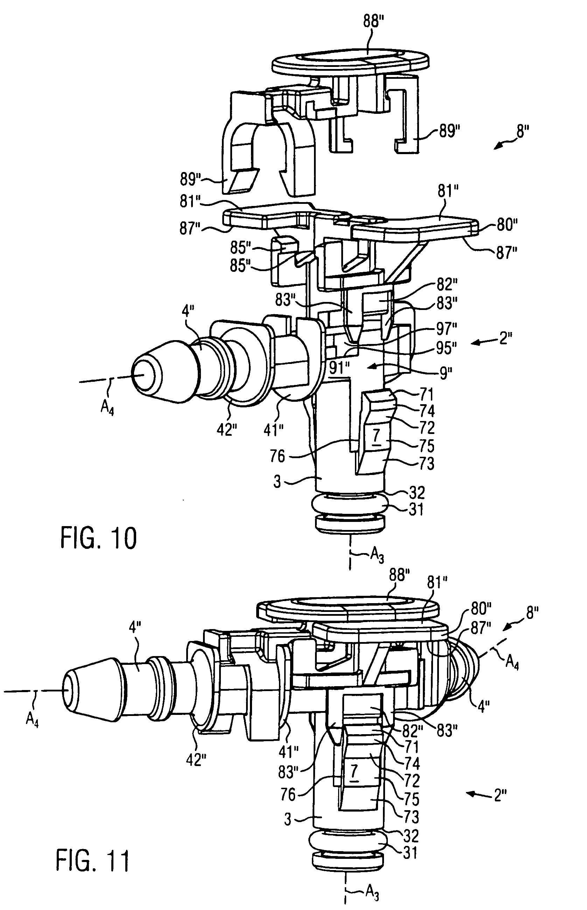

Das dritte Ausführungsbeispiel der Erfindung, das nachstehend mit Bezug auf die Figuren 10 und 11 beschrieben wird, basiert im Wesentlichen auf dem ersten und dem zweiten Ausführungsbeispiel der Erfindung. Für identische Merkmale werden identische Bezugszeichen wie im ersten oder im zweiten Ausführungsbeispiel verwendet und auf eine Wiederholung der Beschreibung verzichtet. Die unterschiedlichen Merkmale gegenüber dem ersten oder zweiten Ausführungsbeispiel sind mit zwei Apostrophen versehen und werden nachstehend erläutert.

In Abwandlung vom ersten oder zweiten Ausführungsbeispiel umfasst die Sicherungseinrichtung 8" ein nochmals anders gestaltetes, im Wesentlichen wippenförmiges Betätigungselement 80" mit je zwei im Wesentlichen rechteckigen Betätigungsflächen 81 ", 87", die in und entgegen der Einsteckrichtung des Stutzens 3 vom Betätigungselement 80" abweisen. Zwei Sicherungsabschnitte 82" erstrecken sich auf zwei sich gegenüber liegenden Seiten des Stutzens 3 jeweils in Einsteckrichtung des Stutzens 3. Die Sicherungsabschnitte 82" werden seitlich jeweils von zwei Führungsabschnitten 83" eingefasst, die in Einsteckrichtung des Stutzens 3 weiter vom Betätigungselement 80" hervorstehen als die Sicherungsabschnitte 82" selbst und auch in radialer Richtung über die Sicherungsabschnitte 82" hervorstehen. Dabei weist die Sicherungseinrichtung 8" eine auf die Außenkonturen des Rastarme 7 abgestimmte Innenkontur auf, so dass die Sicherungseinrichtung 8" zwischen der Lösestellung und der Sicherungsstellung verdrehsicher und/oder kippsicher gleitend an den Rastarmen 7 geführt wird. Die Führungsabschnitte 83" gleiten seitlich an den Rastarmen 7 und verhindern ein Kippen oder Verdrehen der Sicherungseinrichtung 8" gegenüber den Rastarmen 7 und gegenüber dem Stecker 2". Die Außenkontur dieser Führungsabschnitte 83" ist der Innenkontur der Aufnahmeöffnung eines Gegenstücks angepasst, so dass sich die Führungsabschnitte 83" am Gegenstück abstützen und den Stecker 2" im eingesteckten Zustand in der Aufnahmeöffnung zentrieren. Es kann sinnvoll sein, wenn die Führungsabschnitte 83" die Aufnahmeöffnung in der Sicherungsstellung der Sicherungseinrichtung 8" zumindest abschnittsweise verschließen. Das Betätigungselement 80" ist auf einer entgegen der Einsteckrichtung des Stutzens 3 abweisenden Seite des Steckers 2" angeordnet und wird durch einen auf die Anschlussleitungen 4" des Steckers 2" aufsteckbaren Deckel 88" unverlierbar am Stecker 2" gesichert. Der Deckel 88" erstreckt sich im Wesentlichen brückenförmig quer zur Längserstreckungsrichtung des Betätigungselements 80" und ist über Rastabschnitte 89" formschlüssig auf den Anschlussleitungen 4" des Steckers 2" zwischen den Halteabschnitten 41", 42" aufrastbar. Auf einander gegenüber liegenden Innenseiten des Betätigungselements 80" befinden sich nach innen vorspringende Rastvorsprünge 85", über welche die Sicherungseinrichtung 8" in der Lösestellung und in der Sicherungsstellung am Stecker 2" formschlüssig festlegbar und verrastbar ist. Die Sicherungseinrichtung 8" wirkt mit dem Stecker 2" derart zusammen, dass die Sicherungseinrichtung 8' verdrehsicher, verschieblich und unverlierbar auf dem Stecker 2" angeordnet ist und durch Verschiebung in bzw. entgegen der Einsteckrichtung zwischen der Lösestellung, in welcher der Rasteingriff der Schnellkupplung 1 lösbar ist, und der Sicherungsstellung, in welcher der Rasteingriff sichergestellt ist, überführt werden kann.

Die Befestigungseinrichtung 9" umfasst einen Befestigungsabschnitt 91" mit wenigstens einer Rastaufnahme 97", die durch die Raststufe 95" und den Deckel 88" begrenzt wird. Die Rastvorsprünge 85" sind in der Lösestellung direkt am Deckel 88" (Fig. 11) und in der Sicherungsstellung in der Rastaufnahme 97" rastend festlegbar.

Die Konturen und Dimensionen des Steckers 2", der Befestigungseinrichtung 9" und der Sicherungseinrichtung 8" sind wie im ersten und zweiten Ausführungsbeispiel derart aufeinander abgestimmt, dass die Sicherungseinrichtung 8" verdrehsicher, kippsicher und gleitend zwischen der Lösestellung und der Sicherungsstellung überführbar ist. Insbesondere weisen die Führungsabschnitte 83" eine auf die Außenkontur des Steckers 2" abgestimmte Innenkontur auf und gleiten auf den diametral entgegen gesetzten Außenseiten des Steckers 2".

Die bevorzugte Anwendung der Erfindung wird nachstehend mit Bezug auf das erste Ausführungsbeispiel gemäß den Figuren 1 bis 5 im Detail beschrieben. Die bevorzugten Anwendungen der zweiten und dritten Ausführungsbeispiele erfolgen weitgehend analog zur bevorzugten Anwendung des ersten Ausführungsbeispiels und werden nicht gesondert beschrieben.

Die erfindungsgemäße Schnellkupplung 1 wird in Einsteckrichtung in die Aufnahmeöffnung 5 des Gegenstücks 6 eingesteckt, während die Sicherungseinrichtung 8 vorzugsweise in der Lösestellung an der Befestigungseinrichtung 9 verrastet ist. In der Lösestellung (Fig. 1) befinden sich die Rastvorsprünge 85 in der ersten Rastaufnahme 96 zwischen den Raststufen 94, 95 (Fig. 3b). Dabei befinden sich die Sicherungsabschnitte 82 mit den Rastarmen 7 nicht in Eingriff (Fig. 3a), so dass die Rastarme 7 radial nach innen verdrängbar sind.

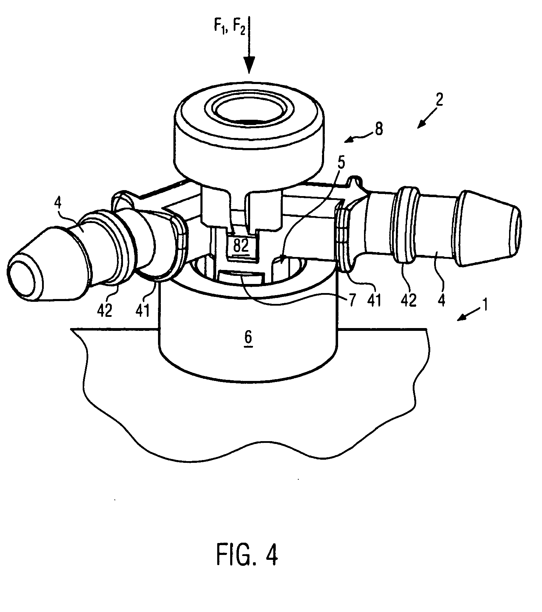

Beim Einsteckvorgang des Stutzens 3 in das Gegenstück 6 wird der Stutzen 3 zunächst über die in Einsteckrichtung vom Stutzen 3 abweisenden Keilflächen 72, 73 in der Aufnahmeöffnung 5 zentriert. Ohne Aufbringen einer Kraft in Einsteckrichtung liegen die in Einsteckrichtung vom Stutzen 3 abweisenden Keilflächen 72 an dem Rastvorsprung 62 an. Durch Aufbringen der Einsteckkraft F2 in Einsteckrichtung wirken die Rastarme 7 über Keileingriffe mit dem Rastvorsprung 62 zusammen, so dass die Rastarme 7 radial nach innen verdrängt werden, um mit der Gleitfläche 75 über den Rastvorsprung 62 zu gleiten. Aufgrund der federnden Eigenschaften der Rastarme 7 stellen sich diese zurück in eine vom Stutzen 3 abragende Position, so dass die Rastarme 7 hinter dem Rastvorsprung 62 in die Hinterschneidung 64 gelangen und verrasten. Die entgegen der Einsteckrichtung vom Stutzen 3 abweisenden Keilflächen 71 gelangen mit dem Rastvorsprung 62 und der Aufweitung 63 in Eingriff, wobei die Rastarme 7 vollständig innerhalb der Aufnahmeöffnung 5 aufgenommen sind und nicht aus der Aufnahmeöffnung 5 über die Oberfläche 60 des Gegenstücks 6 hervorstehen. Damit befindet sich die Schnellkupplung 1 im Rasteingriff mit dem Gegenstück 6, wie in Fig. 4 dargestellt ist.

Die Sicherungseinrichtung 8 wird nun durch Verschiebung gegenüber der Befestigungseinrichtung 9 in Einsteckrichtung von der Lösestellung in die Sicherungsstellung überführt. Erfindungsgemäß ist zum Überführen der Sicherungseinrichtung 8 von der Lösestellung in die Sicherungsstellung eine vorzugsweise in Einsteckrichtung auf die Sicherungseinrichtung 8 wirkende Verriegelungskraft F1 erforderlich, die größer ist als die vorzugsweise in Einsteckrichtung auf die Sicherungseinrichtung 8 wirkende Einsteckkraft F2, um den Stutzen 3 mit dem Gegenstück 6 in Rasteingriff zu bringen. Dies wird im vorliegenden Fall dadurch bewerkstelligt, dass die Kraft F1, die in Einsteckrichtung auf die Sicherungseinrichtung 8 aufzubringen ist, um die Rastvorsprünge 85 aus der ersten Rastaufnahme 96 zwischen den Raststufen 94, 95 in die zweite Rastaufnahme 97 unterhalb der Raststufe 95 zu bringen (Fig. 3b), durch konstruktive Maßnahmen größer eingestellt ist, als die Kraft F2, die in Einsteckrichtung auf die Sicherungseinrichtung 8 aufzubringen ist, um die Rastarme 7 radial nach innen zu verdrängen, bis diese mit der Gleitfläche 75 über den Rastvorsprung 62 gleiten und hinter dem Rastvorsprung 62 verrasten. Die Verriegelungskraft F1 kann bspw. durch Auswahl der Länge und/oder des Neigungswinkels der in Eingriff stehenden Flanken der Rastvorsprünge 85 und der Raststufen 94, 95 gegenüber der Achse A3 des Stutzens 3 bestimmt werden. Dadurch, dass die Verriegelungskraft F1 größer eingestellt ist als die Einsteckkraft F2, kann sichergestellt werden, dass sich der Stutzen 3 in jedem Falle mit dem Gegenstück 6 in Rasteingriff befindet, wenn die Sicherungseinrichtung 8 während des Einsteckvorgangs von der Lösestellung in die Sicherungsstellung überführt wird.

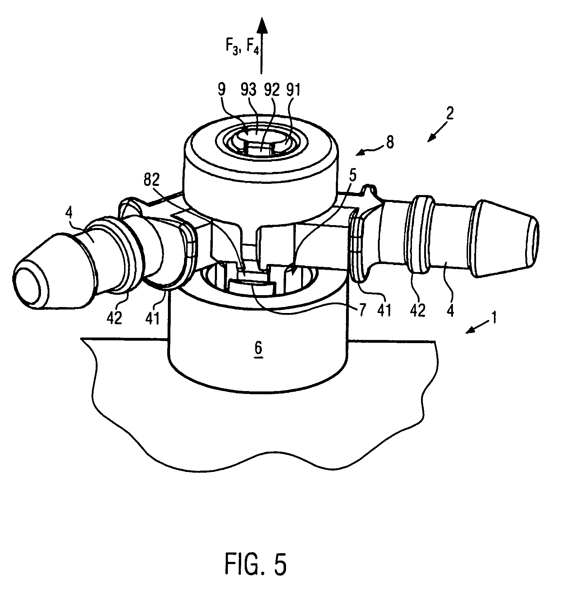

In der Sicherungsstellung (Fig. 5) wirken die Sicherungsabschnitte 82 mit den Rastarmen 7 derart zusammen, dass die Rastarme 7 nicht in radialer Richtung nach innen verdrängt werden können (vgl. Fig. 3a). Vielmehr werden die Rastarme 7 vom Stutzen 3 abgespreizt und über einen Keileingriff mit dem Rastvorsprung 62 tiefer in die Aufnahmeöffnung 5 gedrängt. Dadurch wird eine sekundäre Sicherung verwirklicht. Folglich kann der Stutzen 3 in der Sicherungsstellung nicht aus der Aufnahmeöffnung 5 herausgezogen werden. In der Sicherungsstellung befinden sich die Rastvorsprünge 85 in der zweiten Rastaufnahme 97 unterhalb der Raststufe 95 (Fig. 3b), und die vom Stutzen 3 abweisende Betätigungsfläche 81 schließt im Wesentlichen bündig mit der vom Stutzen 3 abweisenden Oberseite 93 der Befestigungseinrichtung 9 ab (Fig. 5), so dass die Betätigungsfläche 81 und die Oberseite 93 der Befestigungseinrichtung 9 in einer Ebene liegen.

Die Sicherungseinrichtung 8 kann durch Aufbringen einer Entriegelungskraft F3 entgegen der Einsteckrichtung (Fig. 5), vorzugsweise auf die in Einsteckrichtung vom Betätigungselement 80 abweisende Betätigungsfläche 87, von der Sicherungsstellung auch wieder in die Lösestellung überführt werden. In der Lösestellung befindet sich die Sicherungseinrichtung 8 mit den Rastarmen 7 nicht in Eingriff, so dass die Rastarme 7 radial nach innen verdrängbar sind. Durch Aufbringen der Auszugkraft F4 entgegen der Einsteckrichtung kann die Schnellkupplung 1 aus der Aufnahmeöffnung 5 herausgezogen werden.

Vorzugsweise verhalten sich die Kräfte dem Betrag nach wie folgt: |F3| ≥ |F4| > |F1| > |F2| oder |F4| ≥ |F3| > |F1| > |F2|. Die Verriegelungskraft F1 beträgt vorzugsweise wenigstens 30 N, bevorzugt 30 bis 50 N, besonders bevorzugt 40 N. Bei einer manuellen Handhabung/Montage sollte die Betätigungskraft 30 N nicht übersteigen. Da die Montage der erfindungsgemäßen Schnellkupplung vorzugsweise automatisiert erfolgt, kann der Richtwert von 30 N bewusst über schritten werden.

In der Lösestellung ist die Sicherungseinrichtung 8 wieder an der Befestigungseinrichtung 9 festgelegt bzw. verrastet, wobei sich die Rastvorsprünge 85 in der ersten Rastaufnahme 96 zwischen den Raststufen 94, 95 befinden. Die Sicherungseinrichtung 8 ist somit reversibel zwischen Lösestellung und Sicherungsstellung überführbar.

Durch die besondere Gestaltung der Sicherungseinrichtung 8, 8', 8" und des Betätigungselements 80, 80', 80" ist die erfindungsgemäße Schnellkupplung besonders für Automatisierungslösungen geeignet, weil das Betätigungselement 80, 80', 80" von einem Greifarm einer Montagevorrichtung besonders leicht aufnehmbar und positionierbar ist. Durch die aufeinander abgestimmten Konturen und Dimensionen kann die Sicherungseinrichtung 8, 8', 8" verdrehsicher, kippsicher und unverlierbar am Stecker 2, 2', 2" gehalten und gleitend zwischen der Lösestellung und der Sicherungsstellung überführt werden.

Die Schnellkupplung ist nicht auf die beschriebenen Ausführungsbeispiele beschränkt. Beliebige Abwandlungen im Rahmen des Wortlauts der Patentansprüche sind vorstellbar.

## Patentansprüche

1. Schnellkupplung (1) für Fluidleitungen, umfassend: einen Stecker (2) mit einem Stutzen (3) und wenigstens einer quer vom Stutzen (3) abragenden Anschlussleitung (4), wobei der Stutzen (3) dichtend in eine Aufnahmeöffnung (5) eines Gegenstücks (6) einsteckbar ist und über eine Rasteinrichtung (7) mit dem Gegenstück (6) in Rasteingriff bringbar ist; und eine Sicherungseinrichtung (8), die zwischen einer Sicherungsstellung, in welcher der Rasteingriff gegen Lösen gesichert ist, und einer Lösestellung, in welcher der Rasteingriff lösbar ist, überführbar ist, **dadurch gekennzeichnet, dass** eine Kraft (F1), um die Sicherungseinrichtung (8) von der Lösestellung in die Sicherungsstellung zu überführen, größer ist als eine Kraft (F2), um den Stutzen (3) mit dem Gegenstück (6) in Rasteingriff zu bringen.

2. Schnellkupplung (1) nach Anspruch 1, **dadurch gekennzeichnet, dass** die Sicherungseinrichtung (8) zumindest abschnittsweise auf einer entgegen der Einsteckrichtung des Stutzens (3) abweisenden Seite des Steckers (2) angeordnet ist.

3. Schnellkupplung (1) nach wenigstens einem der vorangegangenen Ansprüche, **dadurch gekennzeichnet, dass** die Sicherungseinrichtung (8) ein Betätigungselement (80) aufweist, das auf einer entgegen der Einsteckrichtung des Stutzens (3) abweisenden Seite des Steckers (2) angeordnet ist.

4. Schnellkupplung (1) nach wenigstens einem der vorangegangenen Ansprüche, **dadurch gekennzeichnet, dass** das Betätigungselement (80) im Wesentlichen ringförmig ausgebildet ist.

5. Schnellkupplung (1) nach wenigstens einem der vorangegangenen Ansprüche, **dadurch gekennzeichnet, dass** das Betätigungselement (80) wenigstens eine Betätigungsfläche (81) aufweist, die entgegen der Einsteckrichtung des Stutzens (3) von dem Betätigungselement (80) abweist und/oder wenigstens eine Betätigungsfläche (87) aufweist, die in Einsteckrichtung des Stutzens (3) von dem Betätigungselement (80) abweist.

6. Schnellkupplung (1) nach wenigstens einem der vorangegangenen Ansprüche, **dadurch gekennzeichnet, dass** das Betätigungselement (80) eine Öffnung (86) aufweist, welche sich vorzugsweise entgegen der Einsteckrichtung des Stutzens (3) in oder durch das Betätigungselement (80) erstreckt.

7. Schnellkupplung (1) nach wenigstens einem der vorangegangenen Ansprüche, **dadurch gekennzeichnet, dass** wenigstens ein Teil des Steckers (2) in der Öffnung (86) des Betätigungselements (80) aufnehmbar ist.

8. Schnellkupplung (1) nach wenigstens einem der vorangegangenen Ansprüche, **dadurch gekennzeichnet, dass** wenigstens ein Teil des Steckers (2), vorzugsweise der in der Öffnung (86) aufgenommene Teil des Steckers (2), in wenigstens einer Stellung der Sicherungseinrichtung (8), vorzugsweise in der Sicherungsstellung, bündig mit wenigstens einem Teil des Betätigungselements (80) abschließt.

9. Schnellkupplung (1) nach wenigstens einem der vorangegangenen Ansprüche, **dadurch gekennzeichnet, dass** die Sicherungseinrichtung (8) eine auf die Außenkontur eines Teils des Steckers (2) abgestimmte Innenkontur aufweist, so dass die Sicherungseinrichtung (8) zwischen der Lösestellung und der Sicherungsstellung vorzugsweise verdrehsicher und/oder kippsicher gleitend gegenüber dem Stecker (2) geführt wird.

10. Schnellkupplung (1) nach wenigstens einem der vorangegangenen Ansprüche, **dadurch gekennzeichnet, dass** die Sicherungseinrichtung (8) und/oder der Stecker (2) wenigstens einen Rastvorsprung (85), wenigstens eine Führungsbahn (92) und wenigstens eine innerhalb der Führungsbahn (92) angeordnete Rastaufnahme (96, 97) aufweisen, wobei der Rastvorsprung (85) zwischen der Sicherungsstellung und der Lösestellung in der Führungsbahn (92) gleitend geführt wird, und der Rastvorsprung (85) in der Sicherungsstellung und/oder in der Lösestellung in der Rastaufnahme (96, 97) verrastbar ist.

11. Schnellkupplung (1) für Fluidleitungen, umfassend: einen Stecker (2") mit einem Stutzen (3) und wenigstens einer quer vom Stutzen (3) abragenden Anschlussleitung (4"), wobei der Stutzen (3) dichtend in eine Aufnahmeöffnung (5) eines Gegenstücks (6) einsteckbar ist und über eine Rasteinrichtung (7) mit dem Gegenstück (6) in Rasteingriff bringbar ist; und eine Sicherungseinrichtung (8"), die zwischen einer Sicherungsstellung, in welcher der Rasteingriff gegen Lösen gesichert ist, und einer Lösestellung, in welcher der Rasteingriff lösbar ist, überführbar ist, wobei die Rasteinrichtung (7) wenigstens einen Rastarm umfasst, **dadurch gekennzeichnet, dass** die Sicherungseinrichtung (8") und der Rastarm (7) aufeinander abgestimmte Konturen aufweisen, so dass die Sicherungseinrichtung (8") zwischen der Lösestellung und der Sicherungsstellung verdrehsicher und/oder kippsicher gleitend an dem Rastarm (7) geführt wird.
